# EUROPEAN PATENT SPECIFICATION

(11) **EP 3 061 850 B1**
(45) Date of publication and mention of the grant of the patent: **03.07.2019**
(21) Application number: 16157225.0
(22) Date of filing: 24.02.2016
(51) Int. Cl.: C23C 30/00, C22C 27/04, C22C 27/06, F01D 5/28, F04D 29/32

(54) **HARD PHASELESS METALLIC COATING FOR COMPRESSOR BLADE TIP**
HARTPHASENLOSE METALLBESCHICHTUNG FÜR VERDICHTERSCHAUFELSPITZE
REVÊTEMENT MÉTALLIQUE SANS PHASES DURS POUR POINTE D'AUBE DE COMPRESSEUR

(30) Priority: 25.02.2015 US 201514630958
(43) Date of publication of application: 31.08.2016
(73) Proprietor: United Technologies Corporation, Farmington, CT 06032 (US)
(72) Inventor: STROCK, Christopher, Kennebunk, ME 04043 (US); GUO, Changsheng, South Windsor, CT 06074 (US)
(74) Representative: Dehns

(56) References cited:
- WO-A1-2005/068784
- WO-A2-2006/025865
- DE-A1- 3 500 692
- US-A- 5 883 314
- US-A1- 2011 171 039

## Description

### BACKGROUND

Gas turbine engines include one or more compressors for compressing air prior to combustion. One or more rows of compressor blades extend radially outward from a hub or rotor and towards an inner surface of the compressor casing. During operation, the blades rotate about a central axis to direct the flow of fluids and to compress fluids (e.g., air) within the compressor. A seal is formed between the radially outermost end of a compressor blade, the blade tip, and the inner surface of the casing. In some compressors, the blade tip is coated with an abrasive material and the inner surface of the casing is coated with an abradable material to form a seal. During rotation, the abrasive material on the blade tip rubs against and abrades the abradable material on the casing to form a tight seal between the blade tip and the casing. Maintaining a tight air seal between the blades and compressor casing is needed for optimum gas turbine engine operation.

US 2011/0171039 discloses a blade arrangement of a gas turbine engine with at least one blade which in the radial direction projects into a hot gas passage arranged concentrically to an axis, and terminates in a blade tip which with a clearance lies opposite a heat shield which delimits the hot gas passage. US 5,883,314 discloses abradable coatings for turbine engine shrouds formed from biscuits formed of processed silicon-diffused powder alloy compositions. WO 2005/068784 discloses turbo engine machine blades, particularly gas turbine blades. The turbo machine blade comprises a blade vane and a blade tip.

### SUMMARY

The invention is defined by the features of claim 1. Preferred embodiments are defined in dependent claims 2 to 5. In particular, an assembly includes a casing having an inner diameter surface, an abradable coating located on a portion of the inner diameter surface, a blade having a blade tip configured to rotate within the casing where the blade tip and the inner diameter surface of the casing form a seal, and a hard phaseless metallic coating located on the blade tip. The hard phaseless metallic coating contains no more than 5% by volume of a phase having a Mohs hardness greater than 7 located on the blade tip, wherein said hard phaseless metallic coating comprises at least 99.5% molybdenum.

### BRIEF DESCRIPTION OF THE DRAWINGS

FIG. 1 is a cross section view of a gas turbine engine.
FIG. 2 is a cross section view of a compressor illustrating a blade and compressor casing.
FIG. 3 is a cross section view of a compressor blade having a hard phaseless metallic coating.

### DETAILED DESCRIPTION

The present disclosure describes a hard phaseless metallic coating for use on blade tips. The metallic coating strengthens the blade tip so that the tip is stronger than the corresponding abradable material on the compressor casing adjacent the blade tip at all compressor operating temperatures. This reduces wear on the blade tip and increases the operational lifetime of blades having the metallic coating.

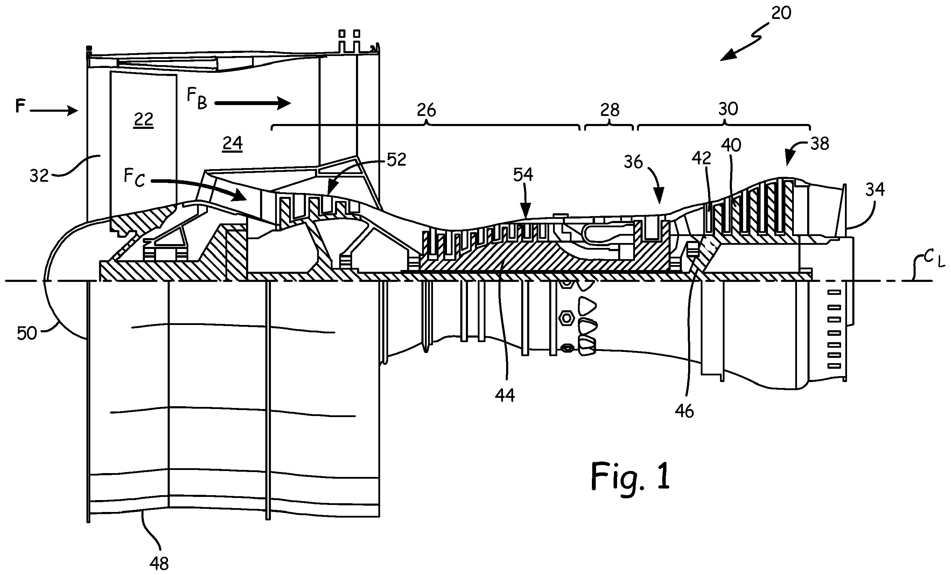

FIG. 1 illustrates a cross-sectional view of gas turbine engine 20. Gas turbine engine 20 includes fan 22 with bypass duct 24 oriented about a turbine core having compressor section 26, combustor section 28, and turbine section 30, which are arranged in flow series along an axial direction with an upstream inlet 32 and downstream exhaust 34.

Turbine section 30 includes high-pressure turbine (HPT) section 36 and low-pressure turbine (LPT) section 38. Turbine sections 36 and 38 each have a number of alternating turbine blades 40 and turbine vanes 42. Turbine vanes 42 are circumferentially oriented with respect to one another, and collectively form a full, annular vane ring about turbine centerline axis C*_{L}* of gas turbine engine 20. HPT section 36 of turbine 30 is coupled to compressor section 26 via shaft 44, forming the high pressure spool. LPT section 38 is coupled to fan 22 via shaft 46, forming the low pressure spool. Shaft 46 is coaxially mounted within shaft 44, about turbine centerline axis C*_{L}*.

Fan 22 is typically mounted to a fan disk or other rotating member, which is driven by shaft 46. As shown in FIG. 1, for example, fan 22 is forward-mounted in engine cowling 48, upstream of bypass duct 24 and compressor section 26, with spinner 50 covering the fan disk to improve aerodynamic performance. Alternatively, fan 22 is aft-mounted in a downstream location, and the coupling configuration varies. Furthermore, while FIG. 1 illustrates a particular two-spool high-bypass turbofan embodiment of gas turbine engine 20, this example is merely illustrative. In other embodiments, gas turbine engine 20 is configured either as a low-bypass turbofan or a high-bypass turbofan, as described above, and the number of spools and fan position vary.

In operation of gas turbine engine 20, airflow F enters via upstream inlet 32 and divides into bypass flow F*_{B}* and core flow F*_{C}* downstream of fan 22. Bypass flow F*_{B}* passes through bypass duct 24 and generates thrust; core flow F*_{C}* passes along the gas path through compressor section 26, combustor section 28 and turbine section 30.

Compressor section 26 includes low pressure compressor 52 and high pressure compressor 54, which together compress incoming air for combustor section 28 where it is mixed with fuel and ignited to produce hot combustion gas. The combustion gas exits combustor section 28 and enters HPT section 36 of turbine section 30, driving shaft 44 and thereby compressor section 26. Partially expanded combustion gas transitions from HPT section 36 to LPT section 38, driving fan 22 via shaft 46. Exhaust gas exits gas turbine engine 20 via downstream exhaust 34.

The thermodynamic efficiency of gas turbine engine 20 is strongly tied to the overall pressure ratio, as defined between the compressed air pressure entering combustor section 28 and the delivery pressure at upstream inlet 32. In general, higher pressure ratios offer increased greater specific thrust, and may result in higher peak gas path temperatures, particularly downstream of combustor section 28, including HPT section 36.

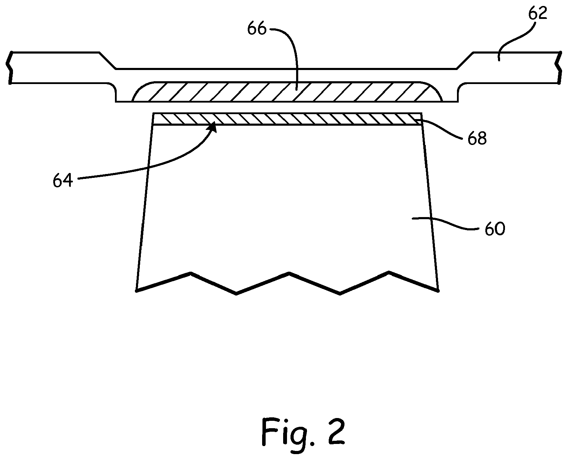

FIG. 2 illustrates a cross section view of a compressor showing blade 60 and compressor casing 62. Blade 60 rotates within compressor casing 62 to compress air from fan 22 before it is delivered to combustor section 28. In some embodiments, blade 60 is part of an integrally bladed rotor. Blade tip 64 is located at a radially outward portion of blade 60. Abradable material 66 is located at a radially inward portion of casing 62. In order to operate at peak efficiency, blade 60 and casing 62 must form a tight seal. One way to seal blade 60 and casing 62 is to form or coat blade tip 64 with an abrasive (abrasive material 68) and position abradable material 66 along inner surface of casing 62 directly across from blade tip 64. As blade 60 rotates, temperatures within the compressor increase, blade 60 and casing 62 expand, and blade tip 64 (with abrasive material 68) and abradable material 66 rub against one another. As the two components rub, a portion of abradable material 66 is worn away. Just enough abradable material 66 is removed to accommodate thermal growth and relative movement so that a tight seal is formed between blade tip 64 and casing 62.

Abradable material 66 can be "soft" and have a porosity that makes it abradable with respect to bare metal blades. Alternatively, abradable material 66 can be generally "hard" and have a higher density and smoother surface and be gas impermeable. "Hard" abradables typically yield improved efficiency when compared to "soft" abradables. In some embodiments, abradable material 66 is a CoNiCrAlY or NiCoCrAlY alloy, where Co is cobalt, Ni is nickel, Cr is chromium, A1 is aluminum and Y is yttrium. According to the prior art, blade tip 64 is generally constructed from abrasive material 68 or abrasive material 68 is applied to blade tip 64. In some examples, blade 60 is a metallic blade and abrasive material 68 applied to blade tip 64 is a ceramic. Abrasive material 68 is generally stronger than abradable material 66 so that blade tip 64 cuts into abradable material 66 to form the seal. However, wear occurs on both abradable material 66 and abrasive material 68. Depending on composition, blade tip 64 can soften at high temperatures and experience increased wear.

The present disclosure describes a blade tip, and a method for forming such a blade tip, that experiences decreased wear even when paired with "hard" abradable materials. According to the present disclosure, a hard phaseless metallic coating 70 is applied to blade tip 64 in place of a conventional abrasive material. A "hard phaseless metal" is a metal with minimal hard abrasive phase. Hard phaseless metals according to the present disclosure contain no phases having a Mohs scale of hardness greater than 7 at a concentration more than 5% by volume. In some embodiments, the hard phaseless metals contain no phases having a Mohs scale of hardness greater than 7 at a concentration more than 1% by volume. The hard phaseless metals can be single-phase metals or metals having multiple phases. Single-phase metallic coatings are homogeneous and have a single solid phase microstructure (as opposed to a heterogeneous composition having a mixture of phases). Single-phase metallic coatings are generally free of precipitates and do not undergo phase changes with changes in temperature, avoiding the possible detrimental effects of the associated volume changes. Multiple-phase metals can include alloys having two or more crystal structures (phases). Alloys can contain carbide, nitride and intermetallic phases.

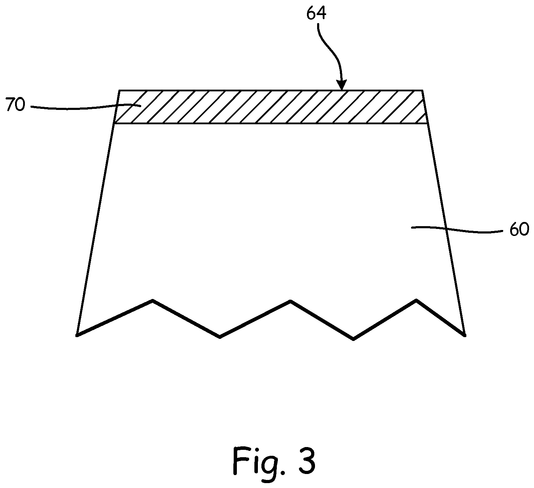

FIG. 3 illustrates a view of compressor blade tip 64 with hard phaseless metallic coating 70. The composition of hard phaseless metallic coating 70 is selected so that blade tip 64 is stronger than abradable material 66 on inner surface of compressor casing 62 at all compressor operating temperatures up to the melting point of abradable material 66 or hard phaseless metallic coating 70. In one embodiment, hard phaseless metallic coating 70 is pure molybdenum. In another embodiment, hard phaseless metallic coating 70 is molybdenum that is at least 99.5% pure. Molybdenum has a Mohs hardness of about 5.5.

Hard phaseless metallic coating 70 can be applied to blade tip 64 a number of different ways. These include, but are not limited to: plating, thermal spray, cold spray, weld overlay, laser powder cladding, direct metal laser sintering, other additive methods and combinations thereof. Hard phaseless metallic coating 70 can be applied to blade tip 64 so that it is relatively dense. In some embodiments, hard phaseless metallic coating 70 has a relative density of 80% or greater. Hard phaseless metallic coating 70 can also have a low concentration of oxides. In some embodiments, hard phaseless metallic coating 70 is less than 10% oxide.

Hard phaseless metallic coating 70 can be deposited onto blade tip 64 at varying thicknesses. In some embodiments, hard phaseless metallic coating 70 is applied to blade tip 64 so that it has a thickness between about 0.002 millimeters (0.0001 inches) and about 0.05 millimeters (0.002 inches). In other embodiments, hard phaseless metallic coating 70 is applied to blade tip 64 so that it has a thickness between about 0.13 millimeters (0.005 inches) and about 0.76 millimeters (0.030 inches). In some large engine applications, hard phaseless metallic coating can have a thickness up to about 1.27 millimeters (0.050 inches). Higher thicknesses can help prevent blade base metal contact at the leading and trailing edges during deep interactions that have an axial motion component.

Hard phaseless metallic coatings 70 according to the present disclosure have higher melting temperatures than typical Inconel 718 blade alloys. As a result, hard phaseless metallic coatings 70 retain greater strength than the blade material as rub contact surface temperatures exceed 649 °C (1200 °F). By placing hard phaseless metallic coating 70 on blade tip 64, the amount of blade wear is reduced. As noted above, hard phaseless metallic coatings 70 is selected so that blade tip 64 is stronger than abradable material 66 on inner surface 68 of compressor casing 62 at all compressor operating temperatures up to the melting point of abradable material 66 or hard phaseless metallic coating 70. Instead of having increased blade wear at high temperatures, hard phaseless metallic coating 70 keeps the level of wear to blade tip 64 low even at high temperatures. The composition, density and thickness of hard phaseless metallic coating 70 can be selected to provide a desired wear ratio between abradable material 66 and blade tip 64. For example, a wear ratio of blade tip 64 (with hard phaseless metallic coating 70) to abradable material 66 of about 1:50 can be provided by varying the density and composition of hard phaseless metallic coating 70.

Hard phaseless metallic coating 70 also offers advantages over state of the art ceramic and abrasive coatings. Blade tips 64 with hard phaseless metallic coating 70 have reduced fatigue debits when compared to blade tips having ceramic coatings. Abrasive coatings also have hard particles extending from the surface of the blade tips requiring larger tip clearance. Increasing the tip clearance reduces the quality of the seal between the blade tip and compressor casing and reduces overall efficiency.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An assembly comprising:
a casing 62 having an inner diameter surface;
an abradable coating located on a portion of the inner diameter surface;
a blade 60 having a blade tip 64 configured to rotate within the casing 62, wherein the blade tip 64 and the inner diameter surface of the casing 62 form a seal; and
an outermost hard phaseless metallic coating 70 which contains no more than 5% by volume of a phase having a Mohs hardness greater than 7 located on the blade tip, wherein said hard phaseless metallic coating 70 comprises at least 99.5% molybdenum.

2. The assembly of claim 1, wherein the hard phaseless metallic coating 70 has a relative density of at least 80%.

3. The assembly of any one of the preceding claims, wherein the hard phaseless metallic coating 70 has an oxygen concentration of less than 10% by weight.

4. The assembly of any one of the preceding claims, wherein the hard phaseless metallic coating 70 has a thickness between about 0.002 millimeters (0.0001 inches) and about 1.27 millimeters (0.050 inches).

5. The assembly of any one of the preceding claims, wherein the abradable coating is a CoNiCrAlY alloy.

## Patentansprüche

1. Anordnung, umfassend:
ein Gehäuse 62, das eine Innendurchmesserfläche aufweist;
eine abreibbare Beschichtung, die sich an einem Abschnitt der Innendurchmesserfläche befindet;
eine Schaufel 60, die eine Schaufelspitze 64 aufweist, die konfiguriert ist, um sich innerhalb des Gehäuses 62 zu drehen, wobei die Schaufelspitze 64 und die Innendurchmesserfläche des Gehäuses 62 eine Dichtung bilden; und
eine äußerste hartphasenlose Metallbeschichtung 70, die nicht mehr als 5 Volumen-% einer Phase enthält, die eine Mohs-Härte von mehr als 7 an der Schaufelspitze aufweist, wobei die hartphasenlose Metallbeschichtung 70 zumindest 99,5 % Molybdän umfasst.

2. Anordnung nach Anspruch 1, wobei die hartphasenlose Metallbeschichtung 70 eine relative Dichte von zumindest 80 % aufweist.

3. Anordnung nach einem der vorhergehenden Ansprüche, wobei die hartphasenlose Metallbeschichtung 70 eine Sauerstoffkonzentration von weniger als 10 Gewichts-% aufweist.

4. Anordnung nach einem der vorhergehenden Ansprüche, wobei die hartphasenlose Metallbeschichtung 70 eine Dicke zwischen ungefähr 0,002 Millimetern (0,0001 Zoll) und ungefähr 1,27 Millimetern (0,050 Zoll) aufweist.

5. Anordnung nach einem der vorhergehenden Ansprüche, wobei die abreibbare Beschichtung eine CoNiCrAlY-Legierung ist.

## Revendications

1. Ensemble comprenant :
un carter 62 ayant une surface de diamètre interne ;
un revêtement abradable situé sur une partie de la surface de diamètre interne ;
une aube 60 présentant une pointe d'aube 64 configurée pour tourner à l'intérieur du carter 62, dans lequel la pointe d'aube 64 et la surface de diamètre interne du carter 62 forment un joint ; et
un revêtement métallique sans phase dur extérieur 70 qui ne contient pas plus de 5 % en volume d'une phase présentant une dureté de Mohs supérieure à 7 situé sur la pointe d'aube, dans lequel ledit revêtement métallique sans phase dur 70 comprend au moins 99,5 % de molybdène.

2. Ensemble selon la revendication 1, dans lequel le revêtement métallique sans phase dur 70 présente une densité relative d'au moins 80 %.

3. Ensemble selon l'une quelconque des revendications précédentes, dans lequel le revêtement métallique sans phase dur 70 présente une concentration en oxygène inférieure à 10 % en poids.

4. Ensemble selon l'une quelconque des revendications précédentes, dans lequel le revêtement métallique sans phase dur 70 présente une épaisseur comprise entre environ 0,002 millimètre (0,0001 pouce) et environ 1,27 millimètre (0,050 pouce).

5. Ensemble selon l'une quelconque des revendications précédentes, dans lequel le revêtement abradable est un alliage de CoNiCrAlY.
